# EUROPEAN PATENT SPECIFICATION

(11) **EP 2 772 580 B1**
(45) Date of publication and mention of the grant of the patent: **01.05.2019**
(21) Application number: 14150081.9
(22) Date of filing: 02.01.2014
(51) Int. Cl.: D06F 39/00, D06F 58/20, F26B 25/00

(54) **Laundry treating apparatus**
Wäschebehandlungsvorrichtung
Appareil de traitement du linge

(30) Priority: 27.02.2013 KR 20130021184
(43) Date of publication of application: 03.09.2014
(73) Proprietor: LG Electronics Inc., Yeongdeungpo-gu SEOUL, 07336 (KR)
(72) Inventor: Kim, Seongkyu, Changwon-si 641-711 (KR); Kim, Myoungjong, Changwon-si 641-711 (KR); Lee, Geunhyung, Changwon-si 641-711 (KR); Lee, Soonjo, Changwon-si 641-711 (KR); Roh, Jeonggeol, Changwon-si 641-711 (KR); Kim, Jongryul, Changwon-si 641-711 (KR); Park, Soowon, Changwon-si 641-711 (KR); Kim, Jongho, Changwon-si 641-711 (KR)
(74) Representative: Ter Meer Steinmeister & Partner

(56) References cited:
- WO-A1-2009/008631
- CN-Y- 2 491 478
- KR-B1- 100 856 575
- US-A- 4 262 430
- US-B1- 6 189 228

## Description

### TECHNICAL FIELD

The present disclosure relates to a laundry treating apparatus.

### BACKGROUND

A laundry treating apparatus is an appliance to perform washing, drying, or both washing and drying. Examples of laundry treating apparatus include washing machines, dryers, and washing and drying machines.

Laundry treating apparatuses capable of drying clothing supply high-temperature air (hot air) to the clothing. These laundry treating apparatuses can be classified into an exhaust type and a circulation (or condensation) type depending on how the air flow is created.

The circulation type laundry treating apparatus removes moisture from the air discharged from the accommodation space containing the laundry (dehumidifies the air), heats the air, and then re-supplies the air to the accommodation space. The exhaust type laundry treating apparatus supplies heated air to the accommodation space, but discharges the air discharged from the accommodation space from the laundry treating apparatus instead of re-supplying the discharged air to the accommodation space.

In the case of a conventional laundry treating apparatus, if fire breaks out (for a variety of reasons) in the laundry contained in the accommodation space, flames in the accommodation space may escape the laundry treating apparatus and spread to the room where the laundry treating apparatus is installed.

When the laundry surrounded by flames stays in the accommodation space for a long time, flammable gas produced during burning of the laundry may cause explosion. When explosion occurs in the accommodation space, flames in the accommodation space may be discharged from the laundry treating apparatus by the pressure of the explosion.

US 6,189,228 B1 describes an apparatus that directs the flow of heated air that is being discharged from a clothing dryer, in which the dryer is positioned upon a rigid support, that elevates the dryer above the normal ground surface. The dryer discharge hose is connected at one end to the dryer, and to a valve assembly, located beneath the dryer, housed in the dryer support. The valve may be actuated so that heated air is either directed to flow through the valve assembly, into another hose which vents directly outside, or through an interior discharge opening, so that heated air is reintroduced back into the dwelling. The apparatus is provided with an access door, so that the valve can be positioned as desired. If air is being reintroduced back into the dwelling, a removable air filtration system is provided. In the event that the air filtration system becomes overwhelmed with particulate matter, the valve has a safety flap which is actuated by increased air pressure, and allows the heated air to vent outside. This prevents possible risk of fire and damage to the dryer unit due to inability to discharge heated air.

US 4262430 A describes a solvent reclaiming dryer having an endless duct system including an evaporating chamber, fan, heater, condenser and condenser bypass duct in its circuit and having means to alternately pass heated solvent-laden gas through the condenser and through the bypass duct to increase the vapor pressure of the solvent that is passing through the condenser, thereby increasing solvent reclamation efficiency. Also shown are an explosion hatch and an automatic fire extinguishing system for use in tumblers evaporating inflammable solvents.

### SUMMARY

A laundry treating apparatus according to the present disclosure may allow flames in the accommodation space containing laundry to be naturally extinguished when fire breaks out in the accommodation space.

A laundry treating apparatus also may prevent explosion from occurring in the accommodation space containing laundry due to flammable gas when fire breaks out in the accommodation space.

Further, a laundry treating apparatus may prevent flames from being discharged from the accommodation space containing laundry when explosion occurs in the accommodation space.

The objects are solved by the features of the independent claims.

The laundry treating apparatus according to the present invention may be a washing machine, a dryer, or a combined washing and drying machine.

According to one aspect of the present invention, a laundry treating apparatus includes a cabinet; an accommodation space provided in the cabinet and configured to receive laundry, such as a drum or tub; a discharge portion for discharging air from the accommodation space out of the cabinet; a supply portion that supplies air into the accommodation space; and a pressure reduction portion positioned in the cabinet and configured to discharge the air in the accommodation space from the accommodation space to the cabinet depending on a pressure in the accommodation space, i.e. when a pressure in the accommodation space becomes equal to or higher than a predetermined reference pressure.

The supply portion is configured to supply air based on discharging air from the accommodation space through the discharge portion. For instance, if a low pressure is generated in the accommodation space for discharging air to the outside, the low pressure may cause air being introduced through the supply portion into the accommodation space.

The pressure reduction portion may include an opening and closing device provided to at least one of the accommodation space, the discharge portion and the supply portion. The opening and closing device may be configured to open and allow the air in the accommodation space to flow into the cabinet based on the pressure in the accommodation space. Depending on whether the opening and closing device is provided to the accommodation space, the supply portion and/or the discharge portion, the opening and closing device may include an exhaust hole penetrating the accommodation space, the supply portion and/or the discharge portion, respectively, and a flap configured to close the exhaust hole. The exhaust hole may be configured to provide an air flow connection between the inside of the accommodation space and the remaining inside of the cabinet, i.e. outside of the accommodation space. The flap may be rotatably provided and configured to close the exhaust hole based on a self-weight of the flap.

The flap may comprise a body configured to open and close the exhaust hole; a body support spaced at a predetermined distance from the body; and a guider adapted to penetrate the body and extend from the body support toward the exhaust hole.

Alternatively, the flap may comprise a body configured to open and close the exhaust hole; a body support and a rotating shaft for rotatably coupling the body to the body support.

The supply portion may comprise a supply duct configured to guide air into the accommodation space. Preferably, the supply portion additionally includes a heating duct configured to heat the air in the cabinet wherein the supply duct is configured to guide air discharged from the heating duct to the accommodation space. Furthermore, the supply duct may include a duct body extending along a direction of a height of the cabinet from the heating duct toward a supply portion connection hole connecting the interior of the supply duct with the interior of the accommodation space. An inclined surface may be provided at the supply duct, the inclined surface being inclined toward a bottom surface of the cabinet. The inclined surface is preferably provided at the supply duct near the position where the supply duct is connected with the supply portion connection hole.

Thus, the opening and closing device may be provided at the supply duct. In this case, the opening and closing device may comprise a supply duct exhaust hole penetrating the supply duct and configured to allow an interior of the supply duct to communicate with the interior of the cabinet, and a supply duct flap provided to the supply duct and configured to close the supply duct exhaust hole. Preferably, the opening and closing device is provided on the inclined surface. The supply duct flap may be rotatably provided to the supply duct and configured to close the supply duct exhaust hole based on a self-weight of the supply duct flap.

Preferably, the cabinet further comprises an introduction port communicating with the accommodation space for introducing laundry and a door provided to open and close the introduction port. The flap may be configured such that a pressure in the accommodation space for opening the flap is less than a pressure in the accommodation space needed to overcome a force by which the door is fastened to the cabinet and open the door. That is, the weight and/or area of the flap may be chosen such that the pressure in the accommodation space for opening the flap is less than a pressure in the accommodation space forcing the door open.
In an exemplary embodiment, the laundry treating apparatus may further comprise a rear support provided in the cabinet and supporting or forming at least a part of a rear
surface of the accommodation space. The rear support may be provided with a supply portion connection hole connected to the supply portion.

Furthermore, the laundry treating apparatus may comprise a front support provided in the cabinet and connecting an introduction port for introducing laundry with the accommodation space. The front support may support a front surface of the accommodation space. The front support may be provided with a discharge portion connection hole that allows the air in the accommodation space to be discharged to the discharge portion.

Thus, the opening and closing device may be provided to at least one of the front support and the rear support.

The cabinet further comprises a cabinet inlet port, e.g. at an upper portion of a rear surface or side surface thereof, allowing the interior of the cabinet to communicate with an exterior of the cabinet. The cabinet inlet port may penetrate the cabinet. The cabinet inlet port does not overlap a projection of the pressure reduction portion onto the cabinet, thus preventing air discharged from the pressure reduction portion from being discharged out of the cabinet through the cabinet inlet port. For instance, the cabinet inlet port does not overlap a projection of the supply duct exhaust hole onto the cabinet. Hence, the cabinet inlet port is arranged at the cabinet separated from the projection of the pressure reduction portion or supply duct exhaust hole onto the cabinet. By these means, air discharged from the pressure reduction portion is not discharged from the cabinet through the cabinet flow inlet.

The pressure reduction portion preferably comprises a discharge portion opening and closing device provided to the discharge portion and configured to open and allow the air in the accommodation space to flow into the cabinet based on the pressure in the accommodation space becoming equal to or higher than the reference pressure.

In a further embodiment, the discharge portion may comprise a connection duct that allows the air from the accommodation space to be discharged therethrough, an exhaust fan configured to suck the air from the accommodation space into the connection duct, and an exhaust duct configured to discharge air introduced into the connection duct out of the cabinet. Here, the discharge portion opening and closing device may be provided to the connection duct.

The discharge portion opening and closing device may comprise a connection duct exhaust hole that allows an interior of the connection duct to communicate with an interior of the cabinet therethrough; and a connection duct flap configured to open and close the connection duct exhaust hole.

The connection duct exhaust hole is preferably positioned between an introduction port of the connection duct and the exhaust fan. The connection duct flap may be rotatably provided to the connection duct. Further, the connection duct flap may be configured to close the connection duct exhaust hole based on a self-weight of the connection duct flap.

The connection duct flap may comprise a body configured to open and close the connection duct exhaust hole; a body support provided to the connection duct and spaced at a predetermined distance from the body; and a guider adapted to penetrate the body and extend from the body support toward the connection duct exhaust hole.

A flow channel may be provided connecting the supply portion, the accommodation space and, the discharge portion. Preferably, a fan is provided in the flow channel and configured to discharge the air from the accommodation space to the outside of the cabinet. The fan may be provided in the discharge portion.

The pressure reduction portion may be provided in an upper stream portion of the flow channel at a location guiding air to the fan, i.e. prior to reaching the fan. The pressure reduction portion may be configured to discharge the air from the accommodation space into the cabinet based on a pressure in the accommodation space becoming equal to or higher than a predetermined reference pressure.

The cabinet may further comprise an introduction port communicating with the accommodation space and a door provided to the cabinet and configured to open and close the introduction port. Preferably, the door is configured to allow the flow channel, i.e. the accommodation space, to selectively communicate with the exterior of the cabinet. Here, the pressure reduction portion may be configured to allow the flow channel to communicate with the interior of the cabinet based on a pressure in the accommodation space that is less than a pressure in the accommodation space needed to overcome a force by which the door is fastened to the cabinet and open the door.

Preferably, the pressure reduction portion blocks communication between the flow channel and the interior of the cabinet based on the fan operation. Alternatively or additionally, the pressure reduction portion may be configured to allow the flow channel to communicate with the interior of the cabinet based on the pressure in the accommodation space being equal to or higher than the predetermined reference pressure.

A cabinet inlet port penetrating the cabinet is provided in order to allow an interior of the cabinet to communicate with the exterior of the cabinet therethrough. Further, the supply portion may be configured to guide air in the cabinet to the accommodation space.

The cabinet inlet port does not overlap a projection of the pressure reduction portion onto the cabinet such that air discharged from the pressure reduction portion does not discharge from the cabinet through the cabinet inlet port. That is, the cabinet inlet port is provided separately from a projection of the pressure reduction portion onto the cabinet. It is to be understood that both the foregoing general description and the following detailed description are exemplary and explanatory and are intended to provide further explanation of the subject matter claimed.

### BRIEF DESCRIPTION OF THE DRAWINGS

FIG. 1 is a view illustrating an example laundry treating apparatus;
FIG. 2 is a view illustrating an example pressure reduction portion (e.g., an example supply portion opening/closing device);
FIG. 3 is a view illustrating an example positional relationship between the pressure reduction portion and a cabinet discharge port provided to the rear panel of the cabinet;
FIG. 4 is a view illustrating another example laundry treating apparatus;
FIGs. 5 and 6 are views illustrating an example pressure reduction portion (e.g., an example discharge portion opening/closing device);
FIG. 7 is a view illustrating yet another example laundry treating apparatus;
FIG. 8 is a view illustrating an example shutoff portion (e.g., an example explosion prevention portion) provided to a laundry treating apparatus; and
FIG. 9 is a view illustrating an example of the laundry treating apparatus provided with both the pressure reduction portion and the shutoff portion.

### DETAILED DESCRIPTION

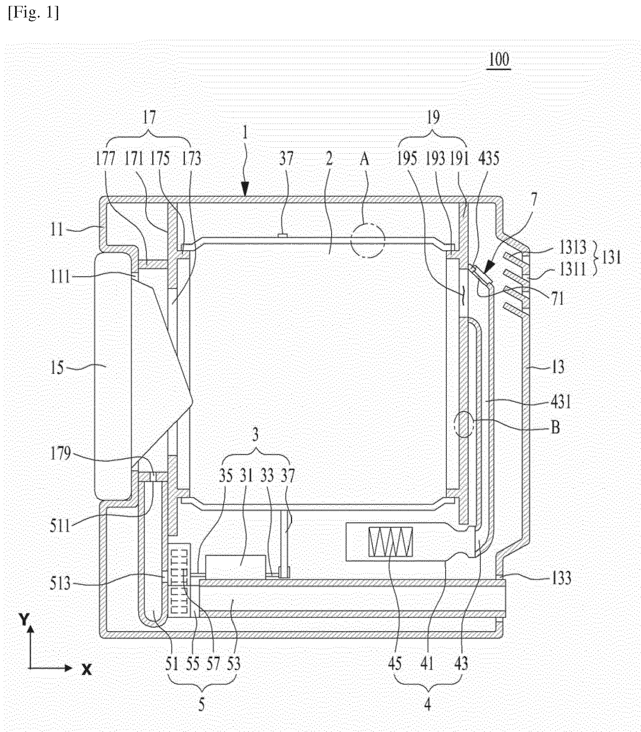

FIG. 1 illustrates an example laundry treating apparatus 100. The laundry treating apparatus 100 includes a cabinet 1 defining an external appearance of the laundry treating apparatus, an accommodation space provided in the cabinet 1 to accommodate laundry, a supply portion 4 to supply air to the accommodation space, and a discharge portion 5 to discharge air in the accommodation space from the cabinet 1.

The cabinet 1 may include a front panel 11 provided with an introduction port 111 for introduction and retrieval of laundry, and a rear panel 13 provided with a cabinet inlet port 131 allowing the interior of the cabinet 1 to communicate with the exterior of the cabinet 1.

The front panel 11 is provided with a door 15 to open and close the introduction port 111. Accordingly, a user may introduce the laundry into or retrieve the same from the accommodation space through the door 15 and the introduction port 111.

The rear panel 13 is arranged to face the front panel 11 of the cabinet 1 provided with the door 15. The cabinet inlet port 131 allows air outside of the cabinet 1 to flow into the cabinet.

That is, the cabinet inlet port 131 is a flow channel (e.g., a cabinet flow channel) allowing air outside of the cabinet to flow into the cabinet therethrough.

The cabinet inlet port 131 may be provided with a plurality of panel through holes 1311 formed to penetrate the rear panel 13 in the width direction of the cabinet 1 (the direction of Z axis), and a flange 1313 extending from the lower surface of each of the panel through holes toward the interior of the cabinet 1 to be inclined.

The flanges 1313 reduce (e.g., prevent) water outside of the cabinet 1 from flowing into the cabinet 1 through the panel through holes 1311. Accordingly, when the indoor space where the laundry treating apparatus 100 is installed is cleaned, it may be possible to minimize introduction of water into the cabinet 1.

In addition, the rear panel 13 may be further provided with a cabinet discharge port 133 to discharge air moving through the discharge portion 5 from the cabinet 1.

In the case that the laundry treating apparatus 100 is only intended to dry the laundry, the accommodation space may be provided with a drum 2 rotatably arranged in the cabinet 1.

The drum 2 may be formed in a cylindrical shape having an open front and open back. In this case, the cabinet 1 may be further provided therein with a front support 17 and a rear support 19 which support the drum 2 such that the drum 2 is rotatable.

The front support 17 may be provided with a support body 171 fixed to the interior of the cabinet 1, a body through hole 173 provided to penetrate the support body 171, and a front flange 175 provided to the support body 171 to support the front of the drum 2.

The body through hole 173 is arranged to communicate with the introduction port 111, and accordingly the laundry introduced through the introduction port 111 may be moved into the drum 2 through the body through hole 173.

The support body 171 may be provided with a guide duct 177 having a cylindrical shape and extending toward the door 15. In this case, the guide duct 177 may be arranged to connect the front panel 11 to the support body 171 to surround the circumferential surface of the body through hole 173 and the circumferential surface of the introduction port 111.

The front flange 175 may be formed to protrude from the surface of the support body 171 toward the drum 2, along the circumferential surface of the body through hole 173. The inner circumferential surface of the front of the drum 2 is rotatably supported by the outer circumferential surface of the front flange 175.

The front support 17 is further provided with a discharge portion connection hole 179 coupled to the discharge portion 5, which will be described in more detail later. The discharge portion connection hole 179 is arranged to penetrate the guide duct 177. The discharge portion connection hole 179 allows the interior of the drum 2 to communicate with the exterior of the drum 2 therethrough.

The rear support 19 may be provided with a support body 191 fixed to the interior of the cabinet 1, and a rear flange 193 provided to the support body 191 to support the back of the drum 2 such that the drum 2 is rotatable.

The rear support 19 is further provided with a supply portion connection hole 195 coupled to the supply portion 4, which will be described in more detail later. The supply portion connection hole 195 is formed to penetrate the support body 191. The supply portion connection hole 195 allows the interior of the drum 2 to communicate with the exterior of the drum 2.

In the case that the laundry treating apparatus 100 is formed to perform drying and washing the laundry, the accommodation space may be provided with a tub arranged in the cabinet 1 to contain washing water, and a drum 2 rotatably coupled to the interior of the tub.

In this case, the front support and the rear support may be omitted. In addition, the body through hole 173, the guide duct 177 and the discharge portion connection hole 179 are provided to the front of the tub, which is cylindrically shaped. The supply portion connection hole 195 may be provided to the outer circumferential surface of the tub, and the drum 2 may be rotatably supported in the tub by a rotating shaft that penetrates the back of the tub. In addition, the circumferential surface of the drum may be provided with a plurality of through holes allowing the tub to communicate with the interior of the drum therethrough.

Hereinafter, a description will be given of the laundry treating apparatus 100 which only functions to dry laundry, as an example. However, features of this example may be applied to other types of laundry treating apparatus.

The drum 2 is rotated by a drive unit 3. As shown, the drive unit 3 may include a drum motor 31 provided in the cabinet 1, a first rotating shaft 33 and a second rotating shaft 35, which are rotated by the drum motor 31, and a belt 37 to connect the circumferential surface of the drum 2 to the first rotating shaft 33.

The second rotating shaft 35 is connected to an exhaust fan 57 through a fan housing 55 provided to the discharge portion 5. Accordingly, in the illustrated example, the drum 2 and the exhaust fan 57 may be rotated at the same time using one drum motor 31.

The supply portion 4 is a supply flow channel through which air (e.g., hot air or unheated air) is supplied to the drum 2. Accordingly, the supply portion 4 may be composed of a supply duct 43 through which air is supplied to the drum 2.

In this case, the supply duct 43 may be arranged to supply air from inside the cabinet 1 into the drum 2, or to supply air outside of the cabinet 1 to the drum 2.

In the case that the supply portion 4 is provided to supply heated air (e.g., hot air) to the drum 2, the supply portion 4 may include a heating duct 41 provided with a heater 45 to heat air and a supply duct 43 to guide the air discharged from the heating duct 41 to the drum 2.

In this case, the heating duct 41 may be formed in the shape of a column having open opposite sides facing each other and positioned in the cabinet 1. In addition, the supply duct 43 may include a duct body 431 to connect the heating duct 41 with the supply portion connection hole 195.

In the case that the heating duct 41 is arranged in a space between the drum 2 and the bottom surface of the cabinet 1 or in a space between the lateral surface of the drum 2 and the cabinet 1, the duct body 431 may extend from the heating duct 41 along the height of the cabinet 1 (e.g., the height of the drum 2).

Further, the duct body 431 coupled to the supply portion connection hole 195 may be provided with a mount surface 435 (inclined surface) parallel with or inclined toward the bottom surface of the cabinet 1.

The discharge portion 5 is a discharge flow channel through which air in the drum 2 is discharged from the cabinet 1 (a discharge flow channel through which air in the drum 2 is discharged to an outside of the cabinet 1). Accordingly, the discharge portion 5 may include a connection duct 51 through which the air in the drum 2 is discharged, and an exhaust duct 53 to guide the air introduced into the connection duct 51 to the outside of the cabinet 1.

The connection duct 51 and the exhaust duct 53 are connected to each other through the fan housing 55. The fan housing 55 is provided with an exhaust fan 57 to move the air in the drum 2 into the connection duct 51.

The connection duct 51 includes a duct inlet port 511 and a duct discharge port 513. The duct inlet port 511 is coupled to the discharge portion connection hole 179 provided in the front support 17.

The fan housing 55 provides a space in which the exhaust fan 57 is rotatable and connects the duct discharge port 513 to the exhaust duct 53.

Accordingly, when the exhaust fan 57 is rotated in the fan housing 55 by the second rotating shaft 35 provided to the drum motor 31, the air in the drum 2 may be introduced into the connection duct 51 through the discharge portion connection hole 179 and the duct inlet port 511, and the air in the connection duct 51 may be moved to the exhaust duct 53 through the duct discharge port 513 and the fan housing 55.

Once the air in the drum 2 is discharged from the cabinet by the exhaust fan 57, the pressure in the drum 2 is lowered, and therefore the air in the cabinet 1 may be moved into the drum 2 through the supply portion 4.

With this configuration, external air may be continuously supplied into the cabinet 1 through the cabinet flow channel, which is formed by the cabinet inlet port 131, and when the heater 45 operates during movement of air into the drum 2 through the supply portion 4, the laundry treating apparatus 100 may supply hot air to the drum 2.

That is, in the illustrated example, the drum 2, the discharge flow channels 51 and 53, and the supply flow channels 41 and 43 are connected to each other to form a single flow channel (one flow channel unit). Accordingly, when the air in the drum 2 is discharged from the cabinet 1 through the exhaust fan 57, air flow is created between the flow channel unit and the cabinet flow channel, and thus air may be continuously supplied to the drum 2. Therefore, the laundry treating apparatus according to the illustrated example does not supply air to the drum 2 unless the exhaust fan 57 operates.

In some circumstances, the laundry treating apparatus 100 configured as above may encounter the following problems when fire breaks out in the laundry stored in the drum 2.

In the case that fire breaks out in the laundry in the drum 2 (the cause of which is not clear), flames in the drum 2 may be discharged from the cabinet 1, and thereby the room where the laundry treating apparatus 100 is installed may catch fire.

In the case that the laundry burns in the drum 2 for a long time, flammable gas produced during burning of the laundry may cause flash over, or backdraft may occur when more than a certain amount of air is suddenly supplied into the drum 2. Accordingly, when explosion occurs in the drum 2, the door may be opened by the pressure of the explosion and thereby the flames in the drum 2 may be discharged from the cabinet 1.

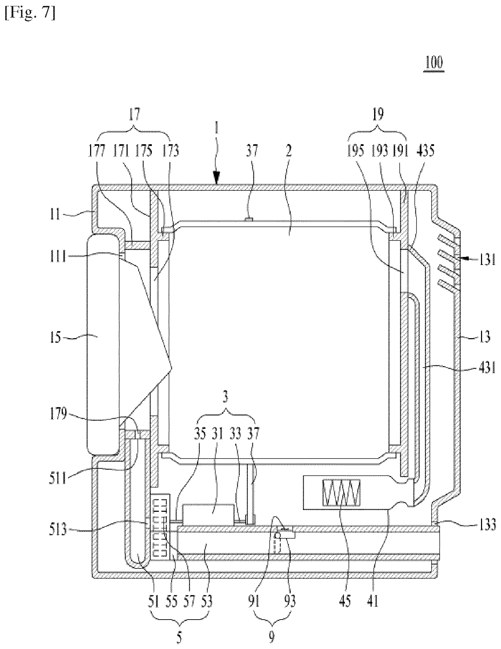

Therefore, in some implementations, the laundry treating apparatus 100 further includes a shutoff portion 9 (FIG. 7) to prevent explosion by blocking supply of air to the drum 2 (naturally extinguishing flames) in addition to a pressure reduction portion 7 (although not shown in FIG. 7) to prevent discharge of flames from the drum 2 to the outside of the cabinet 1 due to pressure produced when explosion occurs in the drum 2.

Hereinafter, a description will be given of the pressure reduction portion 7 and then of a shutoff portion 9.

In the case that explosion occurs in the drum 2, the pressure reduction portion 7 discharges the air in the drum 2 not from the cabinet 1 but into the cabinet 1 such that flames are prevented from being discharged from the cabinet 1.

When explosion (e.g., flash over or backdraft) occurs in the drum 2, the pressure in the drum 2 drastically increases. When pressure increases in the drum 2, a member to seal the drum 2 (such as the door 15) with relatively weak force is damaged or opened, and thereby flames in the drum 2 may be discharged from the cabinet 1.

Accordingly, the pressure reduction portion 7 is provided to prevent the flames from being discharged from the cabinet 1 due to explosion by discharging the air in the drum 2 into the cabinet 1 (by decreasing the pressure in the drum) in the case that explosion occurs in the drum 2 in spite of presence of the shutoff portion 9.

To this end, the pressure reduction portion 7 may be provided in the upper stream of the flow channel unit, which guides air to the exhaust fan 57, to discharge the air in the drum 2 into the cabinet 1 when pressure in the drum 2 is equal to or higher than a predetermined reference pressure.

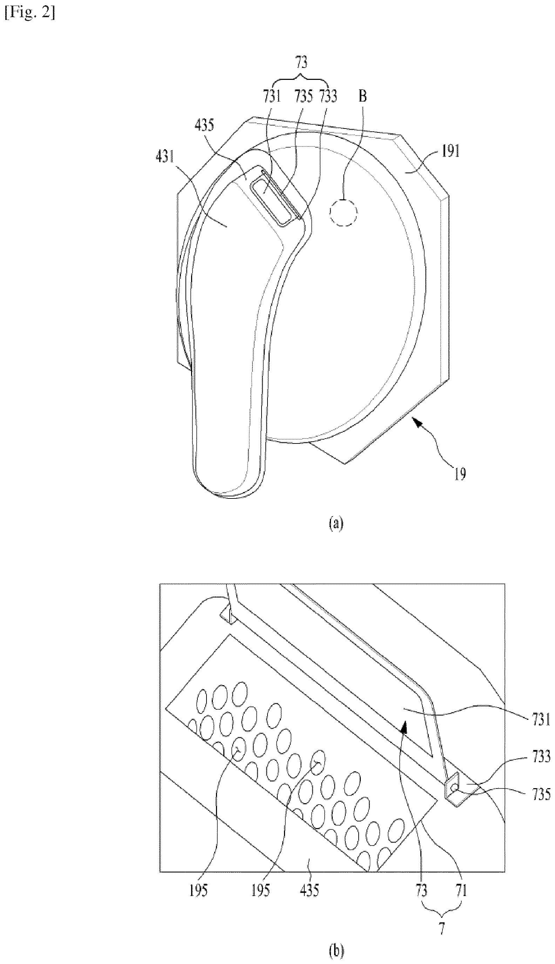

More specifically, referring to FIGS. 1 and 2, the pressure reduction portion 7 may be provided with an opening/closing device 71 and 73 (a supply portion opening/closing device) provided to the supply portion 4 to move the air in the drum 2 into the cabinet 1 when the pressure in the drum 2 is equal to or higher than a predetermined reference pressure.

The reference pressure may be set to a pressure in the drum expected to be produced when explosion occurs in the drum 2 (an experimental value). The reference pressure may be set to (or slightly lower than) a pressure which releases fastening between the door 15 and the cabinet 1 (e.g., a pressure capable of forcing the door open).

The reference pressure may be set to a pressure which overcomes the force by which the door 15 is fastened to the cabinet 1. This is because the door 15, among the structures allowing the interior of the drum to communicate with the exterior of the drum therethrough (e.g., the structures allowing the flow channel unit to communicate with the exterior of the cabinet therethrough), is openable with the smallest force.

In addition, the supply portion opening/closing device may be provided with a supply duct exhaust hole 71 provided to the supply duct 43 to allow the interior of a supply duct 43 to communicate with the interior of the cabinet 1 therethrough, and a supply duct door (a supply duct flap) 73 rotatably provided to the supply duct 41 to open the supply duct exhaust hole 71 when the pressure in the drum 2 is equal to or higher than the reference pressure.

In the case that the reference pressure is set to a pressure equal to or higher than the pressure to open the door 15, the self-weight of the supply duct door 73 may be equal to or lower than the force that fastens the door 15 and the cabinet 1 to each other. This is intended to cause the supply duct door 73 to be opened earlier than the door 15 when explosion occurs in the drum 2.

The supply duct door 73 may be arranged such that the supply duct exhaust hole 71 is closed by self-weight of the supply duct door 73. In other examples, the supply duct door 73 may be arranged such that the supply duct exhaust hole 71 is opened by a controlling device, such as a controller. However, closure based on self-weight may be used in addition or as an alternative to closure by a controller because electronic components equipped in the laundry treating apparatus 100 may malfunction when fire or explosion breaks out in the drum 2.

Further, the supply portion opening/closing device 71 and 73 may be provided at any location on the supply portion 4. For example, the supply portion opening/closing device 71 and 73 may be provided at the supply duct 43 adjacent to the supply portion connection hole 195. This location is intended to allow the air in the drum 2 to be discharged into the cabinet 1 when explosion occurs in the drum 2.

That is, the supply portion opening/closing device 71 and 73 may be provided on the surface of the duct body 431 facing the rear panel 13, or on the mount surface 435 provided at the upper portion of the duct body 431.

In the case that the supply portion opening/closing device 71 and 73 is provided on the surface of the duct body 431 facing the rear panel 13, a space is provided to prevent the rear panel 13 and the supply duct door 73 from interfering with each other when the supply duct door 73 is opened between the duct body 431 and the rear panel 13.

In addition, in the case that the supply portion opening/closing device 71 and 73 is provided on the surface of the duct body 431 facing the rear panel 13, the supply duct exhaust hole 71 may not be completely sealed solely by the self-weight of the supply duct door 73, and noise may be caused during operation of the laundry treating apparatus.

Therefore, the length of the laundry treating apparatus 100 in the depth direction (i.e., the X-axis direction) may be minimized and the supply portion opening/closing device 71 and 73 may be provided on the mount surface 435 to seal the supply duct exhaust hole 71.

As described above, the mount surface 435 may be arranged parallel with the bottom surface of the cabinet 1 or arranged inclined at a predetermined inclination angle from the supply portion connection hole 195 toward the bottom surface of the cabinet 1.

When the mount surface 435 is arranged inclined with respect to the bottom surface of the cabinet 1, rather than parallel with the bottom surface of the cabinet 1, the supply duct door 73 may be promptly opened and the supply duct exhaust hole 71 may be closed by self-weight of the supply duct door 73 when explosion occurs in the drum 2.

Hereinafter, a description will be given of the case in which the supply portion opening/closing device 71 and 73 is provided on the mount surface 435 arranged to be inclined.

As shown in FIG. 2, the supply duct exhaust hole 71 of the supply portion opening/closing device is arranged to penetrate the mount surface 435 to allow the interior of the duct body 431 to communicate with the interior of the cabinet 1 therethrough.

In this case, the supply duct door 73 may be provided with a body 731 (first body) to open and close the supply duct exhaust hole 71, a body support 733 (first body support) provided on the mount surface 435, and a rotating shaft 735 to couple the first body 731 to the first body support 733 such that the first body 731 is rotatable.

In the illustrated example of the laundry treating apparatus 100, when the air in the drum 2 is discharged from the cabinet 1 by the discharge portion 5, a negative pressure is formed in the drum 2, and thereby the air in the cabinet 1 is supplied to the drum 2 through the supply portion 4.

Accordingly, when the laundry treating apparatus 100 normally operates (e.g., when the exhaust fan 57 normally operates), a negative pressure is formed in the supply duct 43, and therefore the supply duct door 73 will not open the supply duct exhaust hole 71 so long as explosion does not occur in the drum 2 (e.g., so long as the pressure in the drum does not become equal to or higher than a reference pressure).

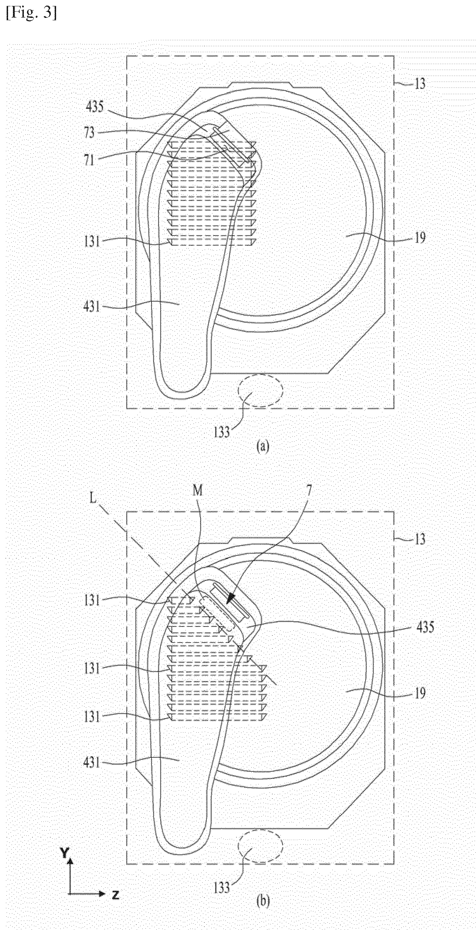

In the case that the cabinet inlet port 131 is provided to the rear panel 13 to supply air into the cabinet 1 as shown in FIG. 3(a), flames in the drum 2 may be discharged from the cabinet 1 in spite of the presence of the supply portion opening/closing device 71 and 73.

That is, in the case that the cabinet inlet port 131 is arranged in the width direction of the cabinet (the Z-axis direction) such that the cabinet inlet port 131 penetrates the projection plane M of the supply duct exhaust hole 71 projected on the rear panel 13, flames produced by explosion in the drum 2 may be disposed from the cabinet 1 via the supply duct exhaust hole 71 and the cabinet inlet port 131.

Accordingly, as shown in FIG. 3(b), the cabinet inlet port 131 may be arranged not to interfere with the projection plane M of the supply duct exhaust hole 71 projected on the rear panel 13.

The cabinet inlet port 131 may be provided to the rear panel 13 in an inclined manner L to be parallel with the lower portion of the projection plane M. In this case, however, it is possible that water outside of the cabinet is introduced into the cabinet through the cabinet inlet port 131.

Therefore, the cabinet inlet port 131 may be arranged on the rear panel 13 to be parallel with the bottom surface of the cabinet 1 but not to interfere with the projection plane M, as shown in FIG. 3(b).

In the illustrated example, the supply portion opening/closing device 71 and 73 is provided to the supply portion 4. This is simply an example, and the present disclosure is not limited thereto. The supply portion opening/closing device 71 and 73 may be provided at various locations so long as the air in the drum 2 is allowed to be discharged into the cabinet 1 when the pressure in the drum 2 is equal to or higher than the reference pressure.

That is, the supply portion opening/closing device 71 may be provided on the circumferential surface A (see FIG. 1) of the drum 2, or on at least one of surfaces B of the front support 17 and the rear support 19 (see FIG. 1).

The laundry treating apparatus 100 configured as described above may prevent flames in the drum 2 from being discharged from the cabinet 1 when pressure in the drum 2 becomes equal to or higher than the reference pressure due to explosion, as the supply duct door 73 opens the supply duct exhaust hole 71 before the door 15 opens the introduction port 111.

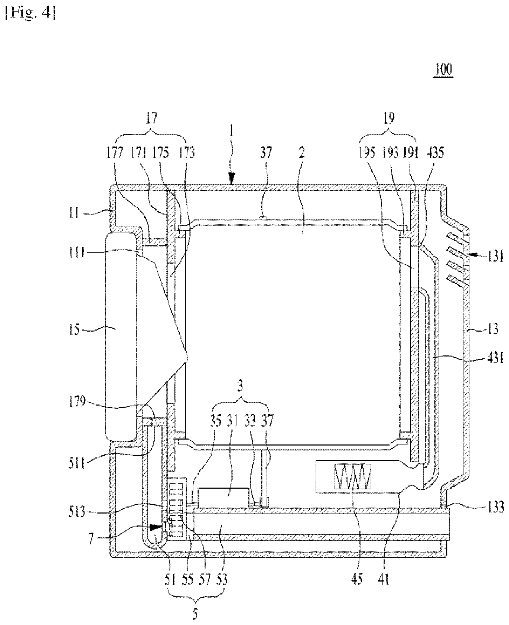

FIG. 4 illustrates an example laundry treating apparatus 100. In this example, the pressure reduction portion 7 is provided with a discharge portion opening/closing device arranged at the discharge portion 5 to discharge the air in the drum into the cabinet 1 when the pressure in the drum is equal or higher than the reference pressure.

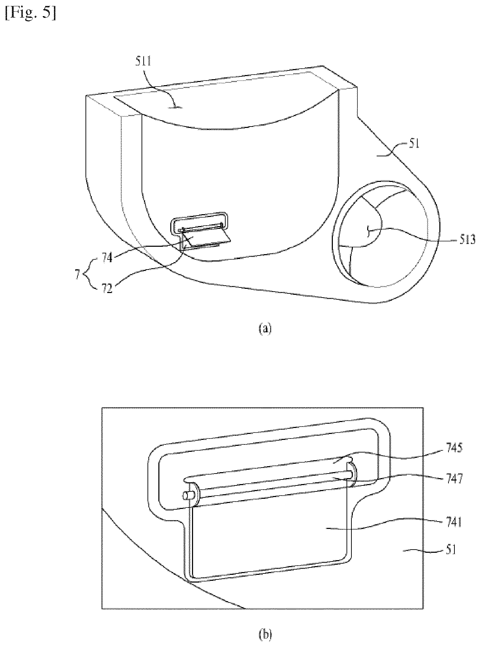

The discharge portion opening/closing device may be provided at any location at the discharge portion 5 so long as the air introduced from the drum 2 into the discharge portion
5 is supplied into the cabinet 1. For instance, the discharge portion opening/closing device may be provided to the connection duct 51, as shown in FIG. 5.

Among the parts of the discharge portion 5, the connection duct 51 is closest to the drum 2. Accordingly, in the case that the discharge portion opening/closing device 72 and 74 is provided to the connection duct 51, the pressure in the drum 2 may be quickly lowered when explosion occurs in the drum 2.

As shown in FIG. 5, the discharge portion opening/closing device may be provided with a connection duct exhaust hole 72 arranged to penetrate the connection duct 51, and a connection duct door (a connection duct flap) 74 rotatably arranged at the connection duct to open and close the connection duct exhaust hole 72.

The connection duct door 74 may be provided with a body 741 (second body) to close the connection duct exhaust hole 72 due to gravity, a second body support 745 fixed to the connection duct 51, and a rotating shaft 747 to connect the second body 741 with the second body support 745.

Similar to the self-weight of the supply duct door 73 (the self-weight of the first body 731), the self-weight of the connection duct door 74 (the self-weight of the second body 741) may be less than the force by which the door 15 and the cabinet 1 are fastened to each other.

Since the discharge portion opening/closing device 72 and 74 is positioned between the drum 2 and the exhaust fan 57, negative pressure is formed in the connection duct 51 when the air in the drum 2 is discharged by the exhaust fan 57. Accordingly, the connection duct door 74 does not open the connection duct exhaust hole 72, unless the pressure in the drum 2 becomes equal to or higher than a reference pressure.

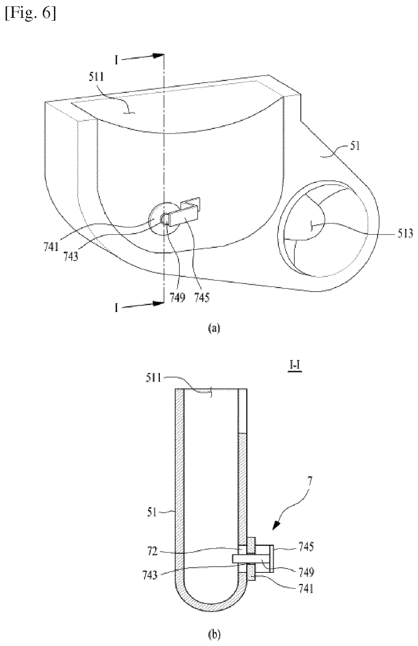

In some implementations, the discharge portion opening/closing device may be configured as shown in FIG. 6.

In this example, the discharge portion opening/closing device is configured such that a guider 749 provided to the second body support 745 guides movement of the second body 741.

To this end, the second body support 745 may be provided with a fixed end fixed to the connection duct 51, and an extended end extending from the fixed end toward the center of the second body 741 and spaced at a predetermined distance from the second body 741. In this case, a body penetrating hole 743 to penetrate the center of the second body 741 may be provided in the second body 741, and the guider 749 may extend from the extended end toward the connection duct exhaust hole 72 to be inserted into the body penetrating hole 743.

The configuration of the discharge portion opening/closing device 72 and 74 described above and shown in FIG. 6 may also be applied to the supply portion opening/closing device 71 and 73.

The discharge portion opening/closing device 72 and 74 shown in FIGs. 5 and 6 is adapted to lower the pressure in the drum 2, but it may not fulfill the purpose in the case that explosion occurs in the drum 2 with the laundry clogging the discharge portion connection hole 179 (e.g., with the duct inlet port 511 closed).

Therefore, the discharge portion opening/closing device 72 and 74 may be provided, along with the opening/closing device 71 and 73, to the supply portion 4.

In the example shown in FIG. 7, the shutoff portion 9 is provided to block supply of air into the drum 2 when fire breaks out in the drum 2 such that flames in the drum 2 are naturally extinguished.

That is, when the exhaust fan 57 operates and the flap 93 of the shutoff portion 9 closes the hole 91, a flow of air between the cabinet flow channel (defined by the cabinet inlet port 131) and the supply flow channels 41 and 43is generated and the drum 2 is in communication with the exterior of the cabinet 1. When the exhaust fan 57 does not operate and the flap 93 opens the hole 91, so that a part of the discharge channel 53 communicates with the inside and the outside of the cabinet 1, an air flow between the supply flow channels 41 and 43 and the part of the discharge channel 53 that communicates with the outside of the cabinet 1 is possible. In other words, when the exhaust fan 57 does not operate the shutoff portion 9 prevents flow of air between the supply flow channels 41 and 43 and the cabinet flow channel 131, but allows flow of air between the discharge channel 53 that communicates with the outside of the cabinet 1 and the cabinet flow channel 131. Thereby, when fire breaks out in the drum 2, likelihood of explosion of the drum 2 may be reduced.

The shutoff portion 9 may be provided at any location in the laundry treating apparatus 100 so long as it is arranged in the down stream of the flow channel unit 41, 43, 2, 51 and 53 which guides the air having passed through the exhaust fan 57 to the outside of the cabinet 1. FIG. 7 shows an example of the shutoff portion 9 provided at the discharge portion 5.

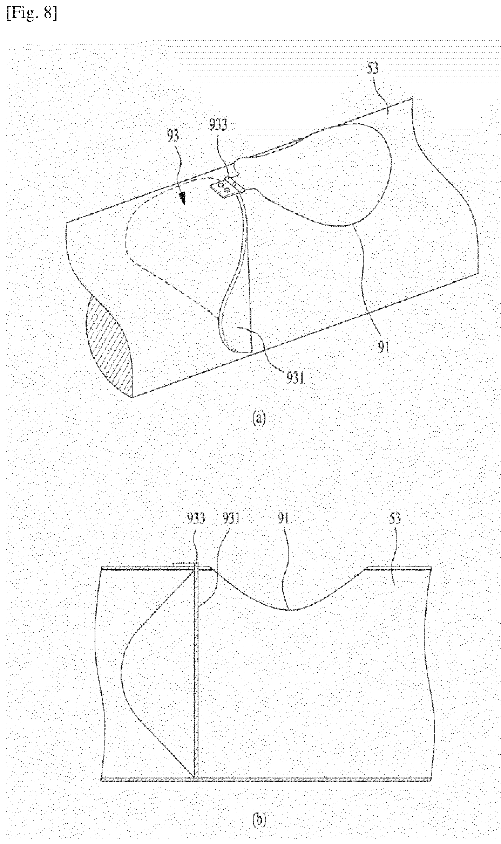

As shown in FIG. 8, the shutoff portion 9 may be provided with an exhaust duct penetrating hole 91 arranged to penetrate the exhaust duct 53 to allow the interior of the exhaust duct 53 to communicate with the interior of the cabinet 1, and a penetrating hole door (a penetrating hole flap) 93 rotatably provided to the exhaust duct 53 to selectively open the exhaust duct penetrating hole 91 and the exhaust duct 53 (e.g., to open one of the exhaust duct penetrating hole and the exhaust duct).

The penetrating hole door 93 may be provided with a body rotation shaft 933 provided to the exhaust duct 53, and a body 931 to selectively open the exhaust duct penetrating hole 91 and the exhaust duct 53 by rotating about the body rotation shaft 933 in the exhaust duct 53.

The body 931 may be configured such that the exhaust duct penetrating hole 91 is opened and closed by a controller. Also, the body 931 may be configured such that the exhaust duct 53 is closed by the self-weight of the body 931 and the exhaust duct penetrating hole 91 is closed by the exhaust fan 57.

This configuration is intended to enable the shutoff portion 9 to operate in the case that electronic devices malfunction due to fire breaking out in the drum 2.

In the illustrated example of the laundry treating apparatus 100, when the air in the drum 2 is discharged from the cabinet 1 by the exhaust fan 57, a negative pressure is formed in the drum 2, and thereby the air in the cabinet 1 is supplied to the drum 2 through the supply portion 4. Accordingly, when the exhaust fan 57 does not operate, little air is supplied into the drum 2.

However, since the exhaust duct 53 provided to the laundry treating apparatus 100 is exposed to the outside of the cabinet 1, air may be supplied into the drum 2 depending on change in atmospheric pressure outside of the laundry treating apparatus 100 even when the exhaust fan 57 does not operate.

That is, in the case of a typical laundry treating apparatus 100, the exhaust duct 53 is connected to a flow channel arranged through the wall of the house to discharge air discharged from the drum 2 to the outdoors during drying of the laundry. Therefore, depending on a change in the outdoor atmospheric pressure, the outdoor air may be supplied into the drum 2 through the exhaust duct 53, or the air in the drum 2 may be discharged to the outdoor through the exhaust duct 5.

This is the same as the case in which the laundry treating apparatus 100 is installed indoors. Depending on change in the indoor atmospheric pressure, air may be supplied into the drum 2 through the exhaust duct 53, or air may be discharged from the drum 2.

In short, simply stopping the exhaust fan 57 when fire breaks out in the drum 2 may not block supply of air into the drum 2.

The shutoff portion 9 is intended to prevent explosion in the drum 2 due to supply of air into the drum 2 when operation of the exhaust fan 57 has been stopped.

Suppose that operation of the exhaust fan 57 has been stopped due to occurrence of explosion in the drum 2 and the atmospheric pressure outside of the laundry treating apparatus 100 is lower.

As shown in FIG. 7, when operation of the exhaust fan 57 is stopped, the exhaust duct penetrating hole 91 is opened and the exhaust duct 53 is closed by the penetrating hole door 93. Accordingly, the air in the drum 2 is not discharged from the cabinet 1 through the exhaust duct 53 even if the atmospheric pressure outside of the cabinet 1 is low.

If the air in the drum 2 is not discharged from the cabinet 1, the air in the cabinet 1 will not be supplied to the drum 2 through the supply portion 4 (flow of air between the supply flow channels 41 and 43 and the cabinet flow channel 131 will be blocked). Therefore, flames in the drum 2 will be extinguished when all of the oxygen in the drum 2 is consumed.

Also, the air in the cabinet 1 will be discharged from the cabinet 1 through the exhaust duct penetrating hole 91 since the atmospheric pressure outside of the cabinet 1 is low (e.g., flow of air between the discharge flow channels 51, 53 and 55 and the cabinet flow channel 131 occurs).

When the air in the cabinet is discharged from the cabinet 1 through the exhaust duct penetrating hole 91, the air in the drum 2 is allowed to be discharged from the cabinet 1 through the supply portion 4. Therefore, the shutoff portion 9 may quickly extinguish the flames in the drum 2 when the atmospheric pressure outside of the cabinet 1 is low.

Next, suppose that operation of the exhaust fan 57 has been stopped due to occurrence of explosion in the drum 2 and the atmospheric pressure outside of the laundry treating apparatus 100 is high.

Since operation of the exhaust fan 57 has been stopped, the exhaust duct penetrating hole 91 is opened and the exhaust duct 53 is closed by the penetrating hole door 93. Accordingly, the air outside of the cabinet 1 is not supplied into the drum 2 through the exhaust duct 53 even if the atmospheric pressure outside of the cabinet 1 is high.

However, the air outside of the cabinet 1 may be introduced into the cabinet 1 through the exhaust duct 53 and the exhaust duct penetrating hole 91 since the atmospheric pressure outside of the cabinet 1 is high.

Through experimentation, however, even if the air outside of the cabinet 1 is introduced into the cabinet 1 through the exhaust duct penetrating hole 91 due to high atmospheric pressure outside of the cabinet 1, it is rarely possible that the air is supplied to the drum 2 through the supply portion 4.

This may be because the pressure in the drum 2 has been increased along with the increase of the amount of gas due to fire breaking out in the drum 2, although the amount of air in the drum 2 is reduced due to fire.

Therefore, the shutoff portion 9 may cause the flames in the drum 2 to be naturally extinguished by shutting off air supplied into the drum 2, even when the atmospheric pressure outside of the laundry treating apparatus 100 is high.

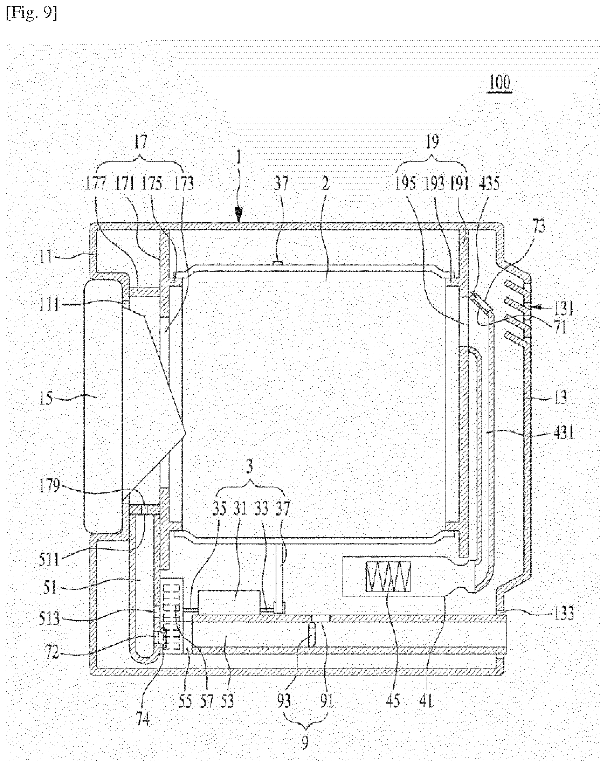

FIG. 9 illustrates an example laundry treating apparatus 100 provided with both the pressure reduction portion 7 and the shutoff portion 9.

In this example, the pressure reduction portion 7 is provided with an opening/closing device 71 and 73 (a supply portion opening/closing device) provided to the supply portion 4 and a discharge portion opening/closing device 72 and 74 provided to the discharge portion 5. However, the pressure reduction portion 7 may also be only provided with one of the opening/closing device 71 and 73 (a supply portion opening/closing device) provided to the supply portion 4 and the discharge portion opening/closing device 72 and 74 provided to the discharge portion 5. The opening/closing device 71 and 73 and discharge portion opening/closing device 72 and 74 are adapted to discharge the air in the drum 2 into the cabinet 1 when the pressure in the drum 2 is equal to or higher than a reference pressure. The shutoff portion 9 is provided to the exhaust duct 53 to open the exhaust duct penetrating hole 91 and close the exhaust duct 53 when operation of the exhaust fan 57 is stopped.

The structures and effects of the opening/closing device 71 and 73, the discharge portion opening/closing device 72 and 74, and the shutoff portion 9 are the same as those described in the previous examples, and, thus, a detailed description thereof will be referenced, rather than repeated.

A laundry treating apparatus according to the present disclosure may allow flames in the accommodation space containing laundry to be naturally extinguished when fire breaks out in the accommodation space.

A laundry treating apparatus also may prevent explosion from occurring in the accommodation space containing laundry due to flammable gas when fire breaks out in the accommodation space.

Further, a laundry treating apparatus may prevent flames from being discharged from the accommodation space containing laundry when explosion occurs in the accommodation space.

It will be apparent to those skilled in the art that various modifications and variations can be made without departing from the scope of the invention.

## Claims

1. A laundry treating apparatus (100) comprising:
a cabinet (1);
an accommodation space provided in the cabinet (1) and configured to receive laundry;
a discharge portion (5) that discharges air from the accommodation space to the outside of the cabinet (1);
a supply portion (4) that supplies air into the accommodation space when the air in the accommodation space is discharged through the discharge portion (5); and
**characterized in that** the laundry treating apparatus (100) includes:
at least one pressure reduction portion (7) configured to discharge the air from the accommodation space into the cabinet (1) when a pressure in the accommodation space is equal or higher than a predetermined reference pressure; and
wherein the cabinet (1) further comprises a cabinet inlet port (131) allowing the interior of the cabinet (1) to communicate with an exterior of the cabinet (1),
wherein the cabinet inlet port (131) is provided separately from a projection of the pressure reduction portion (7) onto the cabinet (1) for preventing air discharged from the pressure reduction portion (7) to be discharged from the cabinet (1) through the cabinet inlet port (131).

2. The laundry treating apparatus (100) according to claim 1, wherein the pressure reduction portion (7) comprises an opening and closing device (71, 72, 73, 74) provided to at least one of the accommodation space, the discharge portion (5) and the supply portion (4) and configured to open and allow the air in the accommodation space to flow into the cabinet (1).

3. The laundry treating apparatus (100) according to claim 2, wherein the opening and closing device (71, 72, 73, 74) comprises:
an exhaust hole (71, 72) provided to penetrate the at least one of the accommodation space, the discharge portion (5) and the supply portion (4) and allow an interior thereof to communicate with the interior of the cabinet (1); and
a flap (73, 74) configured to close the exhaust hole (71, 72).

4. The laundry treating apparatus (100) according to claim 3, wherein the flap (73, 74) is rotatably provided and configured to close the exhaust hole (71, 72) based on a self-weight of the flap (73, 74).

5. The laundry treating apparatus (100) according to claim 3, wherein the flap (73, 74) comprises:
a body (741) configured to open and close the exhaust hole (71, 72);
a body support (745) spaced a predetermined distance from the body (741); and
a guider (749) adapted to penetrate the body (741) to guide the movement of the body (741) and extend from the body support (745) toward the exhaust hole (71, 72).

6. The laundry treating apparatus (100) according to claim 3, 4 or 5,
wherein the flap (73, 74) is configured such that a pressure in the accommodation space needed to overcome a self-weight of the flap (73, 74) for opening the flap (73, 74) is less than a pressure in the accommodation space needed to overcome a force by which a door (15) is fastened to the cabinet (1) for opening the door (1).

7. The laundry treating apparatus (100) according to any one of claims 2 to 6, wherein the supply portion (4) comprises a supply duct (43) configured to guide air to the accommodation space, and
wherein the opening and closing device (71, 73) is provided to the supply duct (43) and allows an interior of the accommodation space to communicate with an interior of the cabinet (1) based on the pressure in the accommodation space being equal to or higher than the reference pressure.

8. The laundry treating apparatus according to claim 7, wherein the opening and closing device (71, 73) comprises:
a supply duct exhaust hole (71) provided to penetrate the supply duct (43) and allow an interior of the supply duct (43) to communicate with the interior of the cabinet (1); and
a supply duct flap (73) provided to the supply duct (43) and configured to close the supply duct exhaust hole (71).

9. The laundry treating apparatus according to claim 7 or 8, further comprising a rear support (19) provided in the cabinet (1) and supporting a rear portion of the accommodation space, the rear support (19) being provided with a supply portion connection hole (195) connected to the supply duct (43),
wherein the supply duct (43) comprises a duct body extending toward the supply portion communication hole (195) along a direction of a height of the cabinet (1), and an inclined portion (435) to connect the duct body (431) with the supply portion connection hole (195), the inclined portion (435) being arranged to be inclined toward a bottom surface of the cabinet (1),
wherein the opening and closing device (71, 73) is provided on the inclined surface (435).

10. The laundry treating apparatus (100) according to any one of claims 2 to 9, further comprising:
a front support (17) provided in the cabinet (1) and supporting a front portion of the accommodation space, the front support (17) being provided with a discharge portion connection hole (179) discharging air from the accommodation space into the discharge portion (5); and
a rear support (19) provided in the cabinet (1) and supporting a rear portion of the accommodation space, the rear support (19) being provided with a supply portion connection hole (195) connected to the supply portion (4),
wherein the opening and closing device (71, 72, 73, 74) is provided to at least one of the front support (17) and the rear support (19).

11. The laundry treating apparatus according to any one of claims 2 to 10, wherein the discharge portion (5) comprises a connection duct (51) that allows the air in the accommodation space to be discharged therethrough,
wherein the opening and closing device (71, 72, 73, 74) is provided to the connection duct (51) and configured to open and allow the air in the accommodation space to flow into the cabinet (1) based on the pressure in the accommodation space becoming equal to or higher than the reference pressure.

12. The laundry treating apparatus (100) according to claim 11, wherein the opening and closing device (72, 74) comprises:
a connection duct exhaust hole (72) positioned at the connection duct (51) between an introduction port (111) of the connection duct (51) and an exhaust fan (57) configured to move the air in the accommodation space into the connection duct (51); and
a connection duct flap (74) provided to the connection duct (51) and configured to close the connection duct exhaust hole (72) based on a self-weight of the connection duct flap (74).

13. The laundry treating apparatus (100) according to any one of the preceding claims, further comprising:
a flow channel that connects the supply portion (4), the accommodation space, and the discharge portion (5); and
a fan (57) provided to the flow channel and configured to discharge the air from the accommodation space to an outside of the cabinet (1),
wherein the pressure reduction portion (7) is provided in an upper stream portion of the flow channel that guides air prior to reaching the fan (57), and configured to discharge the air from the accommodation space into the cabinet (1) when a pressure in the accommodation space is equal or higher than the predetermined reference pressure.

14. The laundry treating apparatus (100) according to claim 13, wherein the pressure reduction portion (7) is configured to block communication between the flow channel and the interior of the cabinet (1) based on the fan (57) operating, and to allow the flow channel to communicate with the interior of the cabinet (1) based on the pressure in the accommodation space being equal to or higher than the predetermined reference pressure.

## Patentansprüche

1. Wäschebehandlungsvorrichtung (100), die Folgendes umfasst:
ein Gehäuse (1);
einen Aufnahmeraum, der in dem Gehäuse (1) vorgesehen ist und konfiguriert ist, Wäsche aufzunehmen;
einen Abluftabschnitt (5), der Luft aus dem Aufnahmeraum zur Außenseite des Gehäuses (1) abführt;
einen Zufuhrabschnitt (4), der dem Aufnahmeraum Luft zuführt, wenn die Luft in dem Aufnahmeraum durch den Abluftabschnitt (5) abgeführt wird; und
**dadurch gekennzeichnet, dass** die Wäschebehandlungsvorrichtung (100) Folgendes umfasst:
wenigstens einen Druckminderungsabschnitt (7), der konfiguriert ist, die Luft aus dem Aufnahmeraum in das Gehäuse (1) abzuführen, wenn ein Druck in dem Aufnahmeraum einem vorgegebenen Bezugsdruck entspricht oder höher ist; und
wobei das Gehäuse (1) ferner einen Gehäuseeinlassanschluss (131) umfasst, damit der Innenraum des Gehäuses (1) mit einer Außenseite des Gehäuses (1) kommunizieren kann,
wobei der Gehäuseeinlassanschluss (131) getrennt von einem Vorsprung des Druckminderungsabschnitts (7) an dem Gehäuse (1) vorgesehen ist, um zu verhindern, dass Luft, die von dem Druckminderungsabschnitt (7) abgeführt wird, durch den Gehäuseeinlassanschluss (131) von dem Gehäuse (1) abgeführt wird.

2. Wäschebehandlungsvorrichtung (100) nach Anspruch 1, wobei der Druckminderungsabschnitt (7) eine Öffnungs- und Schließvorrichtung (71, 72, 73, 74) umfasst, die bei dem Aufnahmeraum, dem Abluftabschnitt (5) und/oder dem Zufuhrabschnitt (4) vorgesehen ist und konfiguriert ist, sich zu öffnen, damit die Luft in dem Aufnahmeraum in das Gehäuse (1) strömen kann.

3. Wäschebehandlungsvorrichtung (100) nach Anspruch 2, wobei die Öffnungs- und Schließvorrichtung (71, 72, 73, 74) Folgendes umfasst:
ein Abluftloch (71, 72), das so vorgesehen ist, dass es durch den Aufnahmeraum, den Abluftabschnitt (5) und/oder den Zufuhrabschnitt (4) verläuft, damit ein Innenraum mit dem Innenraum des Gehäuses (1) kommunizieren kann; und
eine Klappe (73, 74), die konfiguriert ist, das Abluftloch (71, 72) zu schließen.

4. Wäschebehandlungsvorrichtung (100) nach Anspruch 3, wobei die Klappe (73, 74) drehbar vorgesehen ist und konfiguriert ist, das Abluftloch (71, 72) aufgrund eines Eigengewichts der Klappe (73, 74) zu schließen.

5. Wäschebehandlungsvorrichtung (100) nach Anspruch 3, wobei die Klappe (73, 74) Folgendes umfasst:
einen Körper (741), der konfiguriert ist, das Abluftloch (71, 72) zu öffnen und zu schließen;
eine Körperhalterung (745), die um einen vorgegebenen Abstand von dem Körper (741) beabstandet ist; und
ein Führungselement (749), das so beschaffen ist, dass es durch den Körper (741) verläuft, um die Bewegung des Körpers (741) zu führen, und das sich von der Körperhalterung (745) zu dem Abluftloch (71, 72) erstreckt.

6. Wäschebehandlungsvorrichtung (100) nach Anspruch 3, 4 oder 5,
wobei die Klappe (73, 74) so konfiguriert ist, dass ein Druck in dem Aufnahmeraum, der erforderlich ist, ein Eigengewicht der Klappe (73, 74) zum Öffnen der Klappe (73, 74) zu überwinden, niedriger als ein Druck in dem Aufnahmeraum ist, der erforderlich ist, eine Kraft zu überwinden, durch die eine Tür (15) an dem Gehäuse (1) befestigt ist, um die Tür (1) zu öffnen.

7. Wäschebehandlungsvorrichtung (100) nach einem der Ansprüche 2 bis 6, wobei der Zufuhrabschnitt (4) eine Zufuhrleitung (43) umfasst, die konfiguriert ist, Luft zu dem Aufnahmeraum zu leiten, und
wobei die Öffnungs- und Schließvorrichtung (71, 73) an der Zufuhrleitung (43) vorgesehen ist, damit ein Innenraum des Aufnahmeraums mit einem Innenraum des Gehäuses (1) dadurch, dass der Druck in dem Aufnahmeraum gleich dem Bezugsdruck oder höher ist, kommunizieren kann.

8. Wäschebehandlungsvorrichtung nach Anspruch 7, wobei die Öffnungs- und Schließvorrichtung (71, 73) Folgendes umfasst:
ein Zufuhrleitung-Abluftloch (71), das so vorgesehen ist, dass es durch die Zufuhrleitung (43) verläuft, damit ein Innenraum der Zufuhrleitung (43) mit dem Innenraum des Gehäuses (1) kommunizieren kann; und
eine Zufuhrleitungsklappe (73), die an der Zufuhrleitung (43) vorgesehen ist und konfiguriert ist, das Zufuhrleitung-Abluftloch (71) zu schließen.

9. Wäschebehandlungsvorrichtung nach Anspruch 7 oder 8, die ferner eine hintere Halterung (19) umfasst, die in dem Gehäuse (1) vorgesehen ist und einen hinteren Abschnitt des Aufnahmeraums hält, wobei die hintere Halterung (19) mit einem Zufuhrabschnitt-Verbindungsloch (195) versehen ist, das mit der Zufuhrleitung (43) verbunden ist,
wobei die Zufuhrleitung (43) einen Leitungskörper, der sich abwärts zu dem Zufuhrabschnitt-Verbindungsloch (195) entlang einer Richtung einer Höhe des Gehäuses (1) erstreckt, und einen schrägen Abschnitt (435), um den Leitungskörper (431) mit dem Zufuhrabschnitt-Verbindungsloch (195) zu verbinden, umfasst, wobei der schräge Abschnitt (435) so angeordnet ist, dass er in Richtung einer Bodenfläche des Gehäuses (1) geneigt ist,
wobei die Öffnungs- und Schließvorrichtung (71, 73) an der schrägen Oberfläche (435) vorgesehen ist.

10. Wäschebehandlungsvorrichtung (100) nach einem der Ansprüche 2 bis 9, die ferner Folgendes umfasst:
eine vordere Halterung (17), die in dem Gehäuse (1) vorgesehen ist und einen vorderen Abschnitt des Aufnahmeraums hält, wobei die vordere Halterung (17) mit einem Abluftabschnitt-Verbindungsloch (179) versehen ist, das Luft aus dem Aufnahmeraum in den Abluftabschnitt (5) abführt; und
eine hintere Halterung (19), die in dem Gehäuse (1) vorgesehen ist und einen hinteren Abschnitt des Aufnahmeraums hält, wobei die hintere Halterung (19) mit einem Zufuhrabschnitt-Verbindungsloch (195) versehen ist, das mit dem Zufuhrabschnitt (4) verbunden ist,
wobei die Öffnungs- und Schließvorrichtung (71, 72, 73, 74) an der vorderen Halterung (17) und/oder an der hinteren Halterung (19) vorgesehen ist.

11. Wäschebehandlungsvorrichtung nach einem der Ansprüche 2 bis 10, wobei der Abluftabschnitt (5) eine Verbindungsleitung (51) umfasst, durch die Luft in den Aufnahmeraum abgeführt werden kann,
wobei die Öffnungs- und Schließvorrichtung (71, 72, 73, 74) an der Verbindungsleitung (51) vorgesehen ist und konfiguriert ist, diese zu öffnen, damit dadurch, dass der Druck in dem Aufnahmeraum gleich dem Bezugsdruck oder höher ist, die Luft in dem Aufnahmeraum in das Gehäuse (1) strömen kann.

12. Wäschebehandlungsvorrichtung (100) nach Anspruch 11, wobei die Öffnungs- und Schließvorrichtung (72, 74) Folgendes umfasst:
ein Verbindungsleitung-Abluftloch (72), das an der Verbindungsleitung (51) zwischen einem Einlassanschluss (111) der Verbindungsleitung (51) und einem Abluftgebläse (57), das konfiguriert ist, die Luft in dem Aufnahmeraum in die Verbindungsleitung (51) zu bewegen, positioniert ist; und
eine Verbindungsleitungsklappe (74), die an der Verbindungsleitung (51) vorgesehen ist und konfiguriert ist, das Verbindungsleitung-Abluftloch (72) aufgrund eines Eigengewichts der Verbindungsleitungsklappe (74) zu schließen.

13. Wäschebehandlungsvorrichtung (100) nach einem der vorhergehenden Ansprüche, die ferner Folgendes umfasst:
einen Strömungskanal, der den Zufuhrabschnitt (4), den Aufnahmeraum und den Abluftabschnitt (5) verbindet; und
ein Gebläse (57), das an dem Strömungskanal vorgesehen ist und konfiguriert ist, die Luft aus dem Aufnahmeraum zu einer Außenseite des Gehäuses (1) abzuführen,
wobei der Druckminderungsabschnitt (7) in einem oberen Strömungsabschnitt des Strömungskanals, der Luft leitet, bevor diese das Gebläse (57) erreicht, vorgesehen ist und konfiguriert ist, die Luft aus dem Aufnahmeraum in das Gehäuse (1) abzuführen, wenn ein Druck in dem Aufnahmeraum gleich dem vorgegebenen Bezugsdruck oder höher ist.

14. Wäschebehandlungsvorrichtung (100) nach Anspruch 13, wobei der Druckminderungsabschnitt (7) konfiguriert ist, eine Kommunikation zwischen dem Strömungskanal und dem Innenraum des Gehäuses (1) dadurch, dass das Gebläse (57) arbeitet, zu blockieren, damit der Strömungskanal mit dem Innenraum des Gehäuses (1) dadurch, dass der Druck in dem Aufnahmeraum gleich dem vorgegebenen Bezugsdruck oder höher ist, kommunizieren kann.

## Revendications

1. Appareil de traitement de linge (100) comprenant :
une carrosserie (1) ;
un espace de logement prévu dans la carrosserie (1) et configuré pour recevoir du linge ;
une portion d'évacuation (5) qui évacue l'air hors de l'espace de réception vers l'extérieur de la carrosserie (1) ;
une portion d'alimentation (4) qui alimente de l'air jusque dans l'espace de réception quand l'air dans l'espace de réception est évacué via la portion d'évacuation (5) ; et
**caractérisé en ce que** l'appareil de traitement de linge (100) inclut :
au moins une portion de réduction de pression (7) configurée pour évacuer l'air hors de l'espace de réception jusque dans la carrosserie (1) quand une pression dans l'espace de réception est égale ou supérieure à une pression de référence prédéterminée ; et
dans lequel la carrosserie (1) comprend en outre un orifice d'entrée de carrosserie (131) permettant que l'intérieur de la carrosserie (1) communique avec un extérieur de la carrosserie (1),
dans lequel l'orifice d'entrée de carrosserie (131) est prévu séparément d'une projection de la portion de réduction de pression (7) sur la carrosserie (1) pour empêcher que l'air évacué hors de la pression de réduction de pression (7) soit évacué hors de la carrosserie (1) à travers l'orifice d'entrée de carrosserie (131).

2. Appareil de traitement de linge (100) selon la revendication 1, dans lequel la portion de réduction de pression (7) comprend un dispositif d'ouverture et de fermeture (71, 72, 73, 74) prévu sur un élément au moins parmi l'espace de réception, la portion d'évacuation (5) et la portion d'alimentation (4) et configuré pour s'ouvrir et permettre que l'air dans l'espace de réception s'écoule jusque dans la carrosserie (1).

3. Appareil de traitement de linge (100) selon la revendication 2, dans lequel le dispositif d'ouverture et de fermeture (71, 72, 73, 74) comprend :
un trou d'échappement (71, 72) prévu de manière à pénétrer dans l'un au moins des éléments parmi l'espace de réception, la portion d'évacuation (5) et la portion d'alimentation (4) et permettre qu'un intérieur de cet élément communique avec l'intérieur de la carrosserie (1) ; et
un volet (73, 74) configuré pour fermer le trou d'échappement (71, 72).

4. Appareil de traitement de linge (100) selon la revendication 3, dans lequel le volet (73, 74) est prévu avec faculté de rotation et configuré pour fermer le trou d'échappement (71, 72) sur la base d'un poids propre du volet (73, 74).

5. Appareil de traitement de linge (100) selon la revendication 3, dans lequel le volet (73, 74) comprend :
un corps (741) configuré pour ouvrir et fermer le trou d'échappement (71, 72) ;
un support de corps (745) espacé d'une distance prédéterminée depuis le corps (741) ; et
un guide (749) adapté pour pénétrer dans le corps (741) afin de guider le mouvement du corps (741) et s'étendant depuis le support de corps (745) vers le trou d'échappement (71, 72).

6. Appareil de traitement de linge (100) selon la revendication 3, 4 ou 5, dans lequel le volet (73, 74) est configuré de telle manière qu'une pression dans l'espace de réception nécessaire pour surmonter un propre poids du volet (73, 74) pour ouvrir le volet (73, 74) est inférieure à une pression dans l'espace de réception nécessaire pour surmonter une force au moyen de laquelle une porte (15) est attachée à la carrosserie (1) pour ouvrir la porte (1).

7. Appareil de traitement de linge (100) selon l'une quelconque des revendications 2 à 6, dans lequel la portion d'alimentation (4) comprend un conduit d'alimentation (43) configuré pour guider l'air vers l'espace de réception, et
dans lequel le dispositif d'ouverture et de fermeture (71, 73) est prévu sur le conduit d'alimentation (43) et permet qu'un intérieur de l'espace de réception communique avec un intérieur de la carrosserie (1), sur la base du fait que la pression dans l'espace de réception est égale ou supérieure à la pression de référence.

8. Appareil de traitement de linge selon la revendication 7, dans lequel le dispositif d'ouverture et de fermeture (71, 73) comprend :
un trou d'échappement de conduit d'alimentation (71) prévu pour pénétrer dans le conduit d'alimentation (43) et permettre qu'un intérieur du conduit d'alimentation (43) communique avec l'intérieur de la carrosserie (1) ; et
un volet de conduit d'alimentation (73) prévu dans le conduit d'alimentation (43) et configuré pour fermer le trou d'échappement de conduit d'alimentation (71).

9. Appareil de traitement de linge selon la revendication 7 ou 8, comprenant en outre un support arrière (19) prévu dans la carrosserie (1) et supportant une portion arrière de l'espace de réception, le support arrière (19) étant doté d'un trou de connexion de portion d'alimentation (195) connecté au conduit d'alimentation (43),
dans lequel le conduit d'alimentation (43) comprend un corps de conduit s'étendant vers le trou de communication de portion d'alimentation (195) le long d'une direction en hauteur de la carrosserie (1), et une portion inclinée (435) pour connecter le corps de conduit (431) avec le trou de connexion de portion d'alimentation (195), la portion inclinée (435) étant agencée de manière à être inclinée vers une surface de fond de la carrosserie (1),
dans lequel le dispositif d'ouverture et de fermeture (71, 73) est prévu sur la surface inclinée (435).

10. Appareil de traitement de linge (100) selon l'une quelconque des revendications 2 à 9, comprenant en outre :
un support avant (17) prévu dans la carrosserie (1) et supportant une portion avant de l'espace de réception, le support avant (17) étant doté d'un trou de connexion de portion d'évacuation (179) qui évacue l'air hors de l'espace de réception jusque dans la portion de décharge (5) ; et
un support arrière (19) prévu dans la carrosserie (1) et supportant une portion arrière de l'espace de réception, le support arrière (19) étant pourvu d'un trou de connexion de portion d'alimentation (195) connecté à la portion d'alimentation (4),
dans lequel le dispositif d'ouverture et de fermeture (71, 72, 73, 74) est prévu sur l'un au moins du support avant (17) et du support arrière (19).

11. Appareil de traitement de linge selon l'une quelconque des revendications 2 à 10, dans lequel la portion d'évacuation (5) comprend un conduit de connexion (51) qui permet d'évacuer à travers lui-même l'air dans l'espace de réception,
dans lequel le dispositif d'ouverture et de fermeture (71, 72, 73, 74) est prévu sur le conduit de connexion (51), et est configuré pour ouvrir et permettre que l'air dans l'espace de réception s'écoule jusque dans la carrosserie (1) sur la base du fait que la pression dans l'espace de réception devient égale ou supérieure à la pression de référence.

12. Appareil de traitement de linge (100) selon la revendication 11, dans lequel le dispositif d'ouverture et de fermeture (72, 74) comprend :
un trou d'échappement de conduit de connexion (72) positionné sur le conduit de connexion (51) entre un orifice d'introduction (111) du conduit de connexion (51) et un ventilateur d'échappement (57) configuré pour déplacer l'air dans l'espace de communication vers le conduit de connexion (51) ; et
un volet de conduit de connexion (74) prévu dans le conduit de connexion (51) et configuré pour fermer le trou d'échappement de conduit de connexion (72) sur la base d'un poids propre du volet du conduit de connexion (74).

13. Appareil de traitement de linge (100) selon l'une quelconque des revendications précédentes, comprenant en outre :
un canal d'écoulement qui connecte la portion d'alimentation (4), l'espace de réception et la portion d'évacuation (5) ; et
un ventilateur (57) prévu dans le canal d'écoulement et configuré pour évacuer l'air hors de l'espace de réception vers un extérieur de la carrosserie (1),
dans lequel la portion de réduction de pression (7) est prévue dans une portion d'écoulement supérieure du canal d'écoulement qui guide l'air avant d'atteindre le ventilateur (57), et configurée pour évacuer l'air hors de l'espace de réception jusque dans la carrosserie (1) quand une pression dans l'espace de réception est égale ou supérieure à la pression de référence prédéterminée.

14. Appareil de traitement de linge (100) selon la revendication 13, dans lequel la portion de réduction de pression (7) est configurée pour bloquer une communication entre le canal d'écoulement et l'intérieur de la carrosserie (1) sur la base du ventilateur (57) en fonctionnement, et pour permettre que le canal d'écoulement communique avec l'intérieur de la carrosserie (1) sur la base du fait que la pression dans l'espace de réception est égale ou supérieure à la pression de référence prédéterminée.
